(19) Europäisches Patentamt / European Patent Office / Office européen des brevets

(11) **EP 2 026 475 A1**

(12) **DEMANDE DE BREVET EUROPEEN**

(43) Date de publication:
**18.02.2009 Bulletin 2009/08**

(51) Int Cl.:
*H04B 7/08* (2006.01)   *H04B 7/06* (2006.01)
*H04B 1/69* (2006.01)   *H04L 1/06* (2006.01)

(21) Numéro de dépôt: **08161329.1**

(22) Date de dépôt: **29.07.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **16.08.2007 FR 0757079**

(71) Demandeur: **Commissariat à l'Energie Atomique 75015 Paris (FR)**

(72) Inventeur: **Abou Rjeily, Chadi**
**Lebanese American University**
**Faculty of Engeneering and Architecture**
**Byblos (LB)**

(74) Mandataire: **Augarde, Eric et al**
**Brevalex**
**56 Boulevard de l'Embouchure,**
**Bât. B**
**B.P. 27519**
**31075 Toulouse Cedex 2 (FR)**

(54) **Procédé de codage/décodage spatio-temporel pour système de communication mulit-antenne de type impulsionnel**

(57) L'invention concerne un procédé de codage et de décodage spatio-temporel pour système de transmission/réception UWB de type impulsionnel. Le code spatio-temporel, donné pour P=2,4 ou 8 antennes d'émission, permet de coder des symboles d'information 2-PPM et de moduler en position des signaux UWB impulsionnels à partir des symboles codés, sans requérir d'extension de l'alphabet de modulation. Le code spatio-temporel est réel, à diversité maximale et à plein débit. L'invention concerne également un procédé de décodage spatio-temporel permettant d'estimer les symboles d'information ainsi transmis.

FIG. 3

$$S = (\sigma_1, \sigma_2, \sigma_3, \sigma_4)$$

$$C = \begin{pmatrix} \sigma_1 & \sigma_2 & \sigma_3 & \sigma_4 \\ \Omega\sigma_2 & \sigma_1 & \Omega\sigma_4 & \sigma_3 \\ \Omega\sigma_3 & \sigma_4 & \sigma_1 & \Omega\sigma_2 \\ \Omega\sigma_4 & \Omega\sigma_3 & \sigma_2 & \sigma_1 \end{pmatrix}$$

EP 2 026 475 A1

**Description**

**DOMAINE TECHNIQUE**

La présente invention concerne à la fois le domaine des télécommunications en ultra-large bande ou UWB (*Ultra Wide Band*) et celui des systèmes multi-antenne à codage spatio-temporel ou STC (*Space Time Coding*).

**ÉTAT DE LA TECHNIQUE ANTÉRIEURE**

Les systèmes de télécommunication sans fil de type multi-antenne sont bien connus de l'état de la technique. Ces systèmes utilisent une pluralité d'antennes à l'émission et/ou à la réception et sont dénommés, selon le type de configuration adoptée, MIMO (*Multiple Input Multiple Output*), MISO (*Multiple Input Single Output*) ou SIMO (*Single Input Multiple Output*). Par la suite nous emploierons le même terme MIMO pour couvrir les variantes MIMO et MISO précitées. L'exploitation de la diversité spatiale à l'émission et/ou à la réception permet à ces systèmes d'offrir des capacités de canal nettement supérieures à celles des systèmes mono-antenne classique (ou SISO pour Single Input Single Output). Cette diversité spatiale est généralement complétée par une diversité temporelle au moyen d'un codage spatio-temporel. Dans un tel codage, un symbole d'information à transmettre se trouve codé sur plusieurs antennes et plusieurs instants de transmission. On connaît deux grandes catégories de systèmes MIMO à codage spatio-temporel : les systèmes à codage en treillis ou STTC (*Space Time Trellis Coding*) et les systèmes à codage par blocs ou STBC (*Space Time Block Coding*). Dans un système à codage en treillis, le codeur spatio-temporel peut être vu comme une machine à états finis fournissant $P$ symboles de transmission aux $P$ antennes en fonction de l'état courant et du symbole d'information à coder. Le décodage à la réception est réalisé par un algorithme de Viterbi multidimensionnel dont la complexité augmente de manière exponentielle en fonction du nombre d'états. Dans un système à codage par blocs, un bloc de symboles d'information à transmettre est codé en une matrice de symboles de transmission, une dimension de la matrice correspondant au nombre d'antennes et l'autre correspondant aux instants consécutifs de transmission.

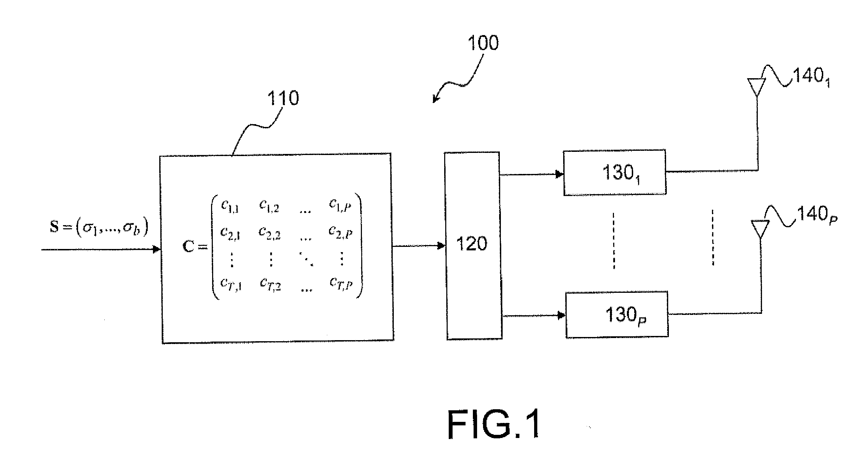

La Fig. 1 représente schématiquement un système de transmission MIMO 100 avec codage STBC. Un bloc de symboles d'information $\mathbf{S}=(\sigma_1,...,\sigma_b)$, par exemple un mot binaire de $b$ bits ou plus généralement de $b$ symboles M-aires, est codé en une matrice spatio-temporelle :

$$\mathbf{C} = \begin{pmatrix} c_{1,1} & c_{1,2} & ... & c_{1,P} \\ c_{2,1} & c_{2,2} & ... & c_{2,P} \\ \vdots & \vdots & \ddots & \vdots \\ c_{T,1} & c_{T,2} & ... & c_{T,P} \end{pmatrix} \tag{1}$$

où les coefficients $c_{t,p}$, $t=1,..,T;p=1,..,P$ du code sont en règle générale des coefficients complexes dépendant des symboles d'information, $P$ est le nombre d'antennes utilisées à l'émission, $T$ est un entier indiquant l'extension temporelle du code, c'est-à-dire le nombre d'utilisations du canal ou PCUs (*Per Channel Use*).
La fonction $f$ qui, à tout vecteur $\mathbf{S}$ de symboles d'information, fait correspondre le mot de code spatio-temporel $\mathbf{C}$, est appelée fonction de codage. Si la fonction $f$ est linéaire on dit que le code spatio-temporel est linéaire. Si les coefficients $c_{t,p}$ sont réels, le code spatio-temporel est dit réel.
Sur la Fig. 1, on a désigné par 110 un codeur spatio-temporel. A chaque instant d'utilisation de canal $t$, le codeur fournit au multiplexeur 120 le $t$-ème vecteur-ligne de la matrice $\mathbf{C}$. Le multiplexeur transmet aux modulateurs $130_1,...,130_P$ les coefficients du vecteur ligne et les signaux modulés sont transmis par les antennes $140_1,...,140_P$.
Le code spatio-temporel est caractérisé par son débit, c'est-à-dire par le nombre de symboles d'information qu'il transmet par instant d'utilisation de canal (PCU). Le code est dit à plein débit s' il est $P$ fois plus élevé que le débit relatif à une utilisation mono-antenne (SISO).
Le code spatio-temporel est caractérisé en outre par sa diversité qui peut être définie comme le rang de la matrice $\mathbf{C}$. On aura une diversité maximale si pour deux mots de code $\mathbf{C}_1$ et $\mathbf{C}_2$ quelconques correspondant à deux vecteurs $\mathbf{S}_1$ et $\mathbf{S}_2$, la matrice $\mathbf{C}_1$-$\mathbf{C}_2$ est de rang plein.
Le code spatio-temporel est enfin caractérisé par son gain de codage qui traduit la distance minimale entre différents mots du code. On peut le définir comme :

$$\min_{\mathbf{C}_1 \neq \mathbf{C}_2} \det\left(\left(\mathbf{C}_1 - \mathbf{C}_2\right)^H \left(\mathbf{C}_1 - \mathbf{C}_2\right)\right) \tag{2}$$

ou, de manière équivalente, pour un code linéaire :

$$\min_{\mathbf{C} \neq 0} \det\left(\mathbf{C}^H \mathbf{C}\right) \tag{3}$$

où det($\mathbf{C}$) signifie le déterminant de $\mathbf{C}$ et $\mathbf{C}^H$ est la matrice conjuguée transposée de $\mathbf{C}$. Pour une énergie donnée de transmission par symbole d'information, le gain de codage est borné.

Un code spatio-temporel sera d'autant plus résistant à l'évanouissement que son gain de codage sera élevé.

Un des premiers exemples de codage spatio-temporel pour un système MIMO à deux antennes de transmission a été proposé dans l'article de S.M. Alamouti intitulé « A transmit diversity technique for wireless communications », publié dans IEEE Journal on selected areas in communications, vol. 16, pp. 1451-1458, Oct. 1998. Le code d'Alamouti est défini par la matrice spatiotemporelle 2×2 :

$$\mathbf{C} = \begin{pmatrix} \sigma_1 & \sigma_2 \\ -\sigma_2^* & \sigma_1^* \end{pmatrix} \tag{4}$$

où $\sigma_1$ et $\sigma_2$ sont deux symboles d'information à transmettre et $\sigma_1^*$ et $\sigma_2^*$ leurs conjugués respectifs. Comme on peut le voir dans l'expression (4), ce code transmet deux symboles d'information pour deux utilisations de canal et son débit est donc d'un symbole/PCU.

Bien qu'initialement présenté dans l'article précité pour des symboles appartenant à une modulation QAM, le code d'Alamouti s'applique également à des symboles d'information appartenant à une modulation PAM ou PSK. En revanche, il ne peut aisément s'étendre à une modulation de position, dite aussi PPM (*Pulse Position Modulation*). Le symbole d'un alphabet de modulation PPM à $M$ positions peut être représenté par un vecteur de $M$ composantes toutes nulles sauf une égale à 1, correspondant à la position de modulation à laquelle une impulsion est émise. L'utilisation de symboles PPM dans l'expression (4) conduit alors à une matrice spatiotemporelle de taille 2$M$×2. Le terme $-\sigma_2^*$ figurant dans la matrice n'est pas un symbole PPM de l'alphabet. Il implique la transmission d'une impulsion affectée d'un changement de signe. Autrement dit, cela revient à utiliser des symboles PPM appartenant à une extension de l'alphabet de modulation PPM.

De manière plus générale, l'utilisation de symboles PPM dans les codes spatio-temporels, notamment les codes orthogonaux réels définis par V. Tarokh et al. dans l'article intitulé « Space-time block codes from orthogonal designs » paru dans IEEE Trans. on Information Theory, Vol. 45, No. 5, July 1999, pp. 1456-1567, conduit à une extension de l'alphabet de modulation PPM.

Les codes orthogonaux réels introduits dans cet article peuvent être considérés comme une généralisation du code d'Alamouti lorsque les symboles d'information sont réels. Ces codes n'existent toutefois que pour $P$=2,4,8 antennes de transmission. Plus précisément :

pour P = 2 ,

$$C = \begin{pmatrix} \sigma_1 & \sigma_2 \\ -\sigma_2 & \sigma_1 \end{pmatrix}$$

pour P = 4 ,

$$C = \begin{pmatrix} \sigma_1 & \sigma_2 & \sigma_3 & \sigma_4 \\ -\sigma_2 & \sigma_1 & -\sigma_4 & \sigma_3 \\ -\sigma_3 & \sigma_4 & \sigma_1 & -\sigma_2 \\ -\sigma_4 & -\sigma_3 & \sigma_2 & \sigma_1 \end{pmatrix}$$

et, pour P=8,

$$C = \begin{pmatrix} \sigma_1 & \sigma_2 & \sigma_3 & \sigma_4 & \sigma_5 & \sigma_6 & \sigma_7 & \sigma_8 \\ -\sigma_2 & \sigma_1 & \sigma_4 & -\sigma_3 & \sigma_6 & -\sigma_5 & -\sigma_8 & \sigma_7 \\ -\sigma_3 & -\sigma_4 & \sigma_1 & \sigma_2 & \sigma_7 & \sigma_8 & -\sigma_5 & -\sigma_6 \\ -\sigma_4 & \sigma_3 & -\sigma_2 & \sigma_1 & \sigma_8 & -\sigma_7 & \sigma_6 & -\sigma_5 \\ -\sigma_5 & -\sigma_6 & -\sigma_7 & -\sigma_8 & \sigma_1 & \sigma_2 & \sigma_3 & \sigma_4 \\ -\sigma_6 & \sigma_5 & -\sigma_8 & \sigma_7 & -\sigma_2 & \sigma_1 & -\sigma_4 & \sigma_3 \\ -\sigma_7 & \sigma_8 & \sigma_5 & -\sigma_6 & -\sigma_3 & \sigma_4 & \sigma_1 & -\sigma_2 \\ -\sigma_8 & -\sigma_7 & \sigma_6 & \sigma_5 & -\sigma_4 & -\sigma_3 & \sigma_2 & \sigma_1 \end{pmatrix}$$

$$(5)$$

où les $\sigma_p, p=1,...,8$ sont des symboles d'information réels, par exemple des symboles PAM. On voit que, comme pour le code d'Alamouti, l'utilisation de symboles PPM ne pourrait se faire qu'en introduisant des impulsions signées, ce qui reviendrait à utiliser un alphabet PPM étendu dans lequel les éléments seraient les vecteurs de $M$ composantes toutes nulles sauf une égale à $\pm 1$.

Un autre domaine des télécommunications fait actuellement l'objet de recherches considérables. Il s'agit des systèmes de télécommunication UWB, pressentis notamment pour le développement des futurs réseaux personnels sans fil (WPAN). Ces systèmes ont pour spécificité de travailler directement en bande de base avec des signaux très large bande. On entend généralement par signal UWB un signal conforme au masque spectral stipulé dans la réglementation du FCC du 14 Février 2002 et révisé en Mars 2005, c'est-à-dire pour l'essentiel un signal dans la bande spectrale 3.1 à 10.6 GHz et présentant une largeur de bande d'au moins 500 MHz à -10dB. En pratique, on connaît deux types de signaux UWB, les signaux multi-bande OFDM (MB-OFDM) et les signaux UWB de type impulsionnel. Nous nous intéresserons par la suite uniquement à ces derniers.

Un signal UWB impulsionnel est constitué d'impulsions très courtes, typiquement de l'ordre de quelques centaines de picosecondes, réparties au sein d'une trame. Afin de réduire l'interférence multi-accès (MAI pour *Multiple Access Interference*), un code de sauts temporels (TH pour *Time Hopping*) distinct est affecté à chaque utilisateur. Le signal issu ou à destination d'un utilisateur $k$ peut alors s'écrire sous la forme:

$$s_k(t) = \sum_{n=0}^{N_s-1} w(t - nT_s - c_k(n)T_c) \tag{6}$$

où $w$ est la forme de l'impulsion élémentaire, $T_c$ est une durée bribe (ou chip), $T_s$ est la durée d'un intervalle élémentaire avec $N_s = N_c T_c$ où $N_c$ est le nombre de chips dans un intervalle, la trame totale étant de durée $T_f = N_s T_s$ où $N_s$ est le nombre d'intervalles dans la trame. La durée de l'impulsion élémentaire est choisie inférieure à la durée chip, soit $T_w \leq T_c$. La séquence $_{Ck}(n)$ pour $n = 0, .., N_s - 1$ définit le code de saut temporel de l'utilisateur $k$. Les séquences de sauts temporels sont choisies de manière à minimiser le nombre de collisions entre impulsions appartenant à des séquences de saut temporel d'utilisateurs différents.

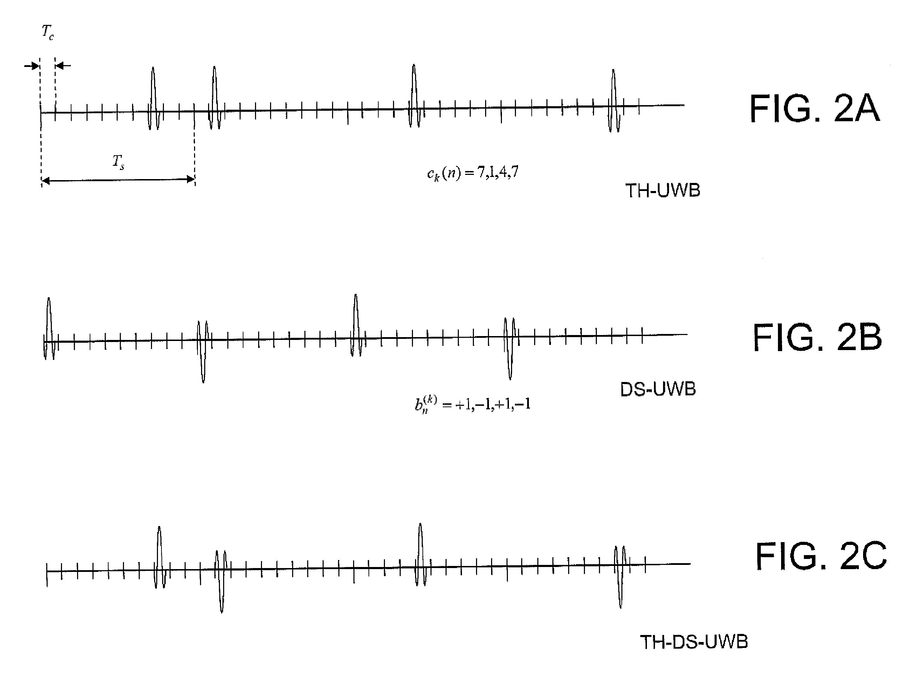

On a représenté en Fig. 2A un signal TH-UWB associé à un utilisateur $k$. Afin de transmettre un symbole d'information donné en provenance ou à destination d'un utilisateur $k$, on module généralement le signal TH-UWB à l'aide d'une modulation de position, soit pour le signal modulé :

$$s_k(t) = \sum_{n=0}^{N_s-1} w(t - nT_s - c_k(n)T_c - \mu_k \varepsilon) \tag{7}$$

où $\varepsilon$ est un retard de modulation (dither) sensiblement inférieur à la durée chip et $\mu_k \in \{0, .., M-1\}$ est la position $M$-aire PPM du symbole, la première position étant considérée ici comme introduisant un retard nul.

Au lieu de séparer les différents utilisateurs au moyen de codes de sauts temporels, il est également possible de les séparer par des codes orthogonaux, par exemple des codes de Hadamard, comme en DS-CDMA. On parle alors de DS-UWB (*Direct Spread* UWB). Dans ce cas on a pour l'expression du signal non modulé, correspondant à (6) :

$$s_k(t) = \sum_{n=0}^{N_s-1} b_n^{(k)} w(t - nT_s) \tag{8}$$

où $b_n^{(k)}$, $n = 0, .., N_s - 1$ est la séquence d'étalement de l'utilisateur $k$. On remarque que l'expression (8) est analogue à celle d'un signal DS-CDMA classique. Elle en diffère cependant par le fait que les chips n'occupent pas toute la trame mais sont répartis à la période $T_s$. On a représenté en Fig. 2B un signal DS-UWB associé à un utilisateur $k$.

Comme précédemment, les symboles d'information peuvent être transmis au moyen d'une modulation PPM. Le signal DS-UWB modulé en position correspondant au signal TH-UWB (7) peut s'exprimer, en conservant les mêmes notations :

$$s_k(t) = \sum_{n=0}^{N_s-1} b_n^{(k)}.w(t - nT_s - \mu_k \varepsilon) \tag{9}$$

Enfin, il est connu de combiner codes de sauts temporels et codes d'étalement spectral pour offrir des accès multiples aux différents utilisateurs. On obtient ainsi un signal UWB impulsionnel TH-DS-UWB de forme générale :

$$s_k(t) = \sum_{n=0}^{N_s-1} b_n^{(k)}.w(t-nT_s-c_k(n)T_c) \qquad (10)$$

On a représenté en Fig. 2C un signal TH-DS-UWB associé à un utilisateur *k*. Ce signal peut être modulé par une modulation de position. On obtient alors pour le signal modulé :

$$s_k(t) = \sum_{n=0}^{N_s-1} b_n^{(k)}.w(t-nT_s-c_k(n)T_c-\mu_k\varepsilon) \qquad (11)$$

Il est connu de l'état de la technique d'utiliser des signaux UWB dans des systèmes MIMO. Dans ce cas, chaque antenne transmet un signal UWB modulé en fonction d'un symbole d'information ou d'un bloc de tels symboles (STBC). Cependant, comme on l'a vu précédemment, l'utilisation de symboles d'information PPM dans des codes spatio-temporels nécessite d'utiliser des impulsions signées, c'est-à-dire de recourir à un alphabet de modulation étendu 2-PAM-M-PPM. La prise en compte de l'inversion de phase suppose en outre une architecture RF à l'émission et à la réception plus complexe que celle d'un système impulsionnel classique. Enfin, certains systèmes UWB ne se prêtent pas ou mal à la transmission d'impulsions signées. Par exemple, les systèmes UWB optiques ne transmettent que des signaux d'intensité lumineuse TH-UWB, nécessairement dépourvus d'information de signe.

Le but de la présente invention est de proposer un procédé de codage spatio-temporel, particulièrement simple et robuste, pour un système UWB multi-antenne. Tout en utilisant une modulation de position, le procédé de codage selon la présente invention ne requiert pas d'extension de l'alphabet de modulation. Il permet en particulier de ne pas recourir à la transmission d'impulsions signées lorsque le signal de support de modulation est du type TH-UWB.

Un second but de la présente invention est de proposer un procédé de décodage permettant d'estimer les symboles transmis selon le procédé précédent.

## EXPOSÉ DE L'INVENTION

La présente invention est définie par un procédé de codage spatio-temporel pour un système transmission UWB comprenant une pluralité *P* d'éléments radiatifs, avec *P*=2,4 ou 8, ledit procédé codant un bloc de symboles d'information $\mathbf{S}=(\sigma_1,\sigma_2,...,\sigma_P)$ appartenant à un alphabet de modulation 2-PPM, en une séquence de vecteurs, les composantes d'un vecteur étant destinées à moduler en position un signal UWB impulsionnel pour un élément radiatif dudit système et une utilisation de canal de transmission donnés, chaque composante correspondant à une position de modulation PPM. Lesdits vecteurs sont obtenus à partir des éléments de la matrice :

$$\mathbf{C} = \begin{pmatrix} \sigma_1 & \sigma_2 \\ \Omega\sigma_2 & \sigma_1 \end{pmatrix}$$

pour P = 2 ,

$$\mathbf{C} = \begin{pmatrix} \sigma_1 & \sigma_2 & \sigma_3 & \sigma_4 \\ \Omega\sigma_2 & \sigma_1 & \Omega\sigma_4 & \sigma_3 \\ \Omega\sigma_3 & \sigma_4 & \sigma_1 & \Omega\sigma_2 \\ \Omega\sigma_4 & \Omega\sigma_3 & \sigma_2 & \sigma_1 \end{pmatrix}$$

pour P = 4 ,

$$C = \begin{pmatrix} \sigma_1 & \sigma_2 & \sigma_3 & \sigma_4 & \sigma_5 & \sigma_6 & \sigma_7 & \sigma_8 \\ \Omega\sigma_2 & \sigma_1 & \sigma_4 & \Omega\sigma_3 & \sigma_6 & \Omega\sigma_5 & \Omega\sigma_8 & \sigma_7 \\ \Omega\sigma_3 & \Omega\sigma_4 & \sigma_1 & \sigma_2 & \sigma_7 & \sigma_8 & \Omega\sigma_5 & \Omega\sigma_6 \\ \Omega\sigma_4 & \sigma_3 & \Omega\sigma_2 & \sigma_1 & \sigma_8 & \Omega\sigma_7 & \sigma_6 & \Omega\sigma_5 \\ \Omega\sigma_5 & \Omega\sigma_6 & \Omega\sigma_7 & \Omega\sigma_8 & \sigma_1 & \sigma_2 & \sigma_3 & \sigma_4 \\ \Omega\sigma_6 & \sigma_5 & \Omega\sigma_8 & \sigma_7 & \Omega\sigma_2 & \sigma_1 & \Omega\sigma_4 & \sigma_3 \\ \Omega\sigma_7 & \sigma_8 & \sigma_5 & \Omega\sigma_6 & \Omega\sigma_3 & \sigma_4 & \sigma_1 & \Omega\sigma_2 \\ \Omega\sigma_8 & \Omega\sigma_7 & \sigma_6 & \sigma_5 & \Omega\sigma_4 & \Omega\sigma_3 & \sigma_2 & \sigma_1 \end{pmatrix}$$

pour $P$=8,
une ligne de la matrice correspondant à une utilisation du canal de transmission et une colonne de la matrice correspondant à un élément radiatif, la matrice **C** étant définie à une permutation près de ses lignes et/ou ses colonnes et $\Omega$ étant une permutation des deux positions de modulation PPM.

Selon une première variante ledit signal impulsionnel est un signal TH-UWB.

Selon une seconde variante, ledit signal impulsionnel est un signal DS-UWB.

Selon une troisième variante ledit signal impulsionnel est un signal TH-DS-UWB.

L'invention concerne également un système de transmission UWB comprenant une pluralité $P$ d'éléments radiatifs, avec $P$=2,4 ou 8, comprenant :

- des moyens de codage pour coder un bloc de symboles d'information **S=($\sigma_1,\sigma_2,...,\sigma_P$)** appartenant à un alphabet de modulation 2-PPM, en une séquence de vecteurs, chaque vecteur étant associé à une utilisation du canal de transmission et un élément radiatif donnés, chaque composante d'un vecteur correspondant à une position de modulation PPM, lesdits vecteurs étant obtenus à partir des éléments de la matrice

$$C = \begin{pmatrix} \sigma_1 & \sigma_2 \\ \Omega\sigma_2 & \sigma_1 \end{pmatrix}$$

pour P = 2 ,

$$C = \begin{pmatrix} \sigma_1 & \sigma_2 & \sigma_3 & \sigma_4 \\ \Omega\sigma_2 & \sigma_1 & \Omega\sigma_4 & \sigma_3 \\ \Omega\sigma_3 & \sigma_4 & \sigma_1 & \Omega\sigma_2 \\ \Omega\sigma_4 & \Omega\sigma_3 & \sigma_2 & \sigma_1 \end{pmatrix}$$

pour P = 4 ,

$$\mathbf{C} = \begin{pmatrix} \sigma_1 & \sigma_2 & \sigma_3 & \sigma_4 & \sigma_5 & \sigma_6 & \sigma_7 & \sigma_8 \\ \Omega\sigma_2 & \sigma_1 & \sigma_4 & \Omega\sigma_3 & \sigma_6 & \Omega\sigma_5 & \Omega\sigma_8 & \sigma_7 \\ \Omega\sigma_3 & \Omega\sigma_4 & \sigma_1 & \sigma_2 & \sigma_7 & \sigma_8 & \Omega\sigma_5 & \Omega\sigma_6 \\ \Omega\sigma_4 & \sigma_3 & \Omega\sigma_2 & \sigma_1 & \sigma_8 & \Omega\sigma_7 & \sigma_6 & \Omega\sigma_5 \\ \Omega\sigma_5 & \Omega\sigma_6 & \Omega\sigma_7 & \Omega\sigma_8 & \sigma_1 & \sigma_2 & \sigma_3 & \sigma_4 \\ \Omega\sigma_6 & \sigma_5 & \Omega\sigma_8 & \sigma_7 & \Omega\sigma_2 & \sigma_1 & \Omega\sigma_4 & \sigma_3 \\ \Omega\sigma_7 & \sigma_8 & \sigma_5 & \Omega\sigma_6 & \Omega\sigma_3 & \sigma_4 & \sigma_1 & \Omega\sigma_2 \\ \Omega\sigma_8 & \Omega\sigma_7 & \sigma_6 & \sigma_5 & \Omega\sigma_4 & \Omega\sigma_3 & \sigma_2 & \sigma_1 \end{pmatrix}$$

pour $P$=8,

une ligne de la matrice correspondant à une utilisation de canal de transmission et une colonne de la matrice correspondant à un élément radiatif, la matrice **C** étant définie à une permutation près de ses lignes et/ou ses colonnes et $\Omega$ étant une permutation des deux positions de modulation PPM ;

- une pluralité de modulateurs pour moduler en position un signal UWB impulsionnel, chaque modulateur étant associé à un élément radiatif et modulant en position ledit signal, pendant une utilisation du canal de transmission, à l'aide des composantes du vecteur associé au dit élément radiatif et à ladite utilisation du canal ;
- chaque élément radiatif étant adapté à émettre le signal ainsi modulé par ledit modulateur associé.

Selon un premier mode de réalisation, les éléments radiatifs sont des antennes UWB.

Selon un second mode de réalisation, les éléments radiatifs sont des diodes laser ou des diodes électroluminescentes.

L'invention concerne encore un procédé de décodage spatio-temporel, pour un système de réception UWB à $Q$ capteurs, destiné à estimer les symboles d'information transmis par le système de transmission défini ci-dessus, le procédé comprenant :

- une étape d'obtention de $2QL$ variables de décision respectivement associées à $2QL$ voies de réception, chaque voie de réception étant relative à un capteur, un trajet de propagation entre les systèmes de transmission et de réception, et une position de modulation de l'alphabet de modulation 2-PPM, ladite étape d'obtention étant répétée pendant $P$ utilisations consécutives du canal de transmission, pour fournir un vecteur **Y** de taille $2QLP$, dont les composantes sont les $2QL$ variables de décision obtenues pour lesdites $P$ utilisations ;
- une étape de calcul du vecteur **Z**=**Y**-(**I$_P$**$\otimes$**H**)$\Gamma$ où **I$_P$** est la matrice unité de taille $P{\times}P$, **H** est une matrice représentative du canal de transmission, $\Gamma$ est un vecteur constant représentatif du code et $\otimes$ est le produit de Kronecker ;

- une étape de calcul du vecteur $\tilde{\mathbf{Z}} = \left( \mathbf{h}_\varphi^{\mathrm{H}} \otimes \mathbf{I}_2 \right) \mathbf{Z}$ avec **h$_\varphi$**=(**I$_P$**$\otimes$**h**)$_\varphi$, où **I$_2$** est la matrice unité de taille $2{\times}2$, **h** est une matrice réduite du canal telle que **H**=**h**$\otimes$**I$_2$** et $\varphi$ étant la matrice

$$\varphi = \begin{pmatrix} 1 & 0 \\ 0 & -1 \\ 0 & 1 \\ 1 & 0 \end{pmatrix}$$

pour P = 2 ,

$$\varphi = \begin{pmatrix} 1 & 0 & 0 & 0 \\ 0 & -1 & 0 & 0 \\ 0 & 0 & 0 & 0 \\ 0 & 0 & 0 & -1 \\ 0 & 1 & 0 & 0 \\ 1 & 0 & 0 & 0 \\ 0 & 0 & 0 & 1 \\ 0 & 0 & -1 & 0 \\ 0 & 0 & 1 & 0 \\ 0 & 0 & 0 & -1 \\ 1 & 0 & 0 & 0 \\ 0 & 1 & 0 & 0 \\ 0 & 0 & 0 & 1 \\ 0 & 0 & 1 & 0 \\ 0 & -1 & 0 & 0 \\ 1 & 0 & 0 & 0 \end{pmatrix}'$$

pour P=4
et la matrice en annexe pour $P$=8 ;

- une étape de comparaison, pour chaque symbole, des composantes du vecteur $\tilde{\mathbf{Z}}$, relatives aux deux positions PPM de ce symbole, la position PPM estimée étant celle correspondant à la composante de plus grande amplitude.

L'invention concerne enfin un système de réception UWB comprenant une pluralité $Q$ de capteurs et, pour chaque capteur, un récepteur Rake associé, caractérisé en ce que chaque récepteur Rake comporte une pluralité 2$L$ de doigts, chaque doigt correspondant à un trajet de propagation et à une position de modulation de l'alphabet de modulation 2-PPM, le système comprenant en outre :

- des moyens de conversion série parallèle pour former un vecteur **Y** de taille 2$QLP$, dont les composantes sont les 2$QL$ sorties des doigts des récepteurs Rake, pour $P$ utilisations consécutives du canal de transmission ;
- des moyens de calcul pour calculer d'abord un vecteur **Z=Y-(I$_P$⊗H)**Γ où **I$_P$** est la matrice unité de taille $P{\times}P$, **H** est une matrice représentative du canal transmission, Γ est un vecteur constant représentatif du code et ⊗ est le produit de Kronecker, puis un vecteur $\tilde{\mathbf{Z}} = \left( \mathbf{h}_{\varphi}^{\mathrm{H}} \otimes \mathbf{I}_2 \right) \mathbf{Z}$ avec **h$_\varphi$=(I$_P$⊗h)**φ, où **I$_2$** est la matrice unité de taille 2${\times}$2, **h** est une matrice réduite du canal telle que **H=h⊗I$_2$** et φ étant la matrice :

$$\varphi = \begin{pmatrix} 1 & 0 \\ 0 & -1 \\ 0 & 1 \\ 1 & 0 \end{pmatrix}$$

pour P = 2 ,

$$\varphi = \begin{pmatrix} 1 & 0 & 0 & 0 \\ 0 & -1 & 0 & 0 \\ 0 & 0 & 0 & 0 \\ 0 & 0 & 0 & -1 \\ 0 & 1 & 0 & 0 \\ 1 & 0 & 0 & 0 \\ 0 & 0 & 0 & 1 \\ 0 & 0 & -1 & 0 \\ 0 & 0 & 1 & 0 \\ 0 & 0 & 0 & -1 \\ 1 & 0 & 0 & 0 \\ 0 & 1 & 0 & 0 \\ 0 & 0 & 0 & 1 \\ 0 & 0 & 1 & 0 \\ 0 & -1 & 0 & 0 \\ 1 & 0 & 0 & 0 \end{pmatrix},$$

pour P=4
et la matrice en annexe pour $P$=8 ;
- des moyens de comparaison adaptés à comparer pour chaque symbole, deux composantes du vecteur $\tilde{Z}$, relatives aux deux positions PPM de ce symbole, la position PPM estimée étant celle correspondant à la composante de plus grande amplitude.

Selon un premier mode de réalisation, les capteurs sont des antennes UWB.
Selon un second mode de réalisation, les capteurs sont des photodétecteurs.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

la Fig. 1 représente schématiquement un système de transmission MIMO avec codage STBC connu de l'état de la technique ;
les Fig. 2A à 2C représentent les formes respectives de signaux TH-UWB, DS-UWB et TH-DS-UWB ;
la Fig. 3 représente schématiquement un dispositif de transmission multi-antenne utilisant un procédé de codage spatio-temporel selon un mode de réalisation de l'invention ;
la Fig. 4 représente schématiquement un dispositif de réception pour décoder les symboles d'information transmis par le dispositif de la Fig. 3, selon un mode de réalisation de l'invention.

## EXPOSÉ DÉTAILLÉ DE MODES DE RÉALISATION PARTICULIERS

L'idée à la base de l'invention est d'introduire une diversité de codage grâce à un opérateur de permutation agissant sur les positions de modulation des symboles d'information.
On considèrera dans la suite un système de transmission UWB à $P$=2,4,8 antennes de transmission ou, de manière plus générale à $P$=2,4,8 éléments radiatifs. Les symboles d'information appartiennent à un alphabet de modulation par position. On note comme précédemment *M* le cardinal de cet alphabet.

Le code spatio-temporel utilisé par le dispositif de transmission selon l'invention est défini par la matrice suivante, pour P = 2 ,

$$C = \begin{pmatrix} \sigma_1 & \sigma_2 \\ \Omega\sigma_2 & \sigma_1 \end{pmatrix}$$

pour P = 4 ,

$$C = \begin{pmatrix} \sigma_1 & \sigma_2 & \sigma_3 & \sigma_4 \\ \Omega\sigma_2 & \sigma_1 & \Omega\sigma_4 & \sigma_3 \\ \Omega\sigma_3 & \sigma_4 & \sigma_1 & \Omega\sigma_2 \\ \Omega\sigma_4 & \Omega\sigma_3 & \sigma_2 & \sigma_1 \end{pmatrix}$$

et, pour P=8,

$$C = \begin{pmatrix} \sigma_1 & \sigma_2 & \sigma_3 & \sigma_4 & \sigma_5 & \sigma_6 & \sigma_7 & \sigma_8 \\ \Omega\sigma_2 & \sigma_1 & \sigma_4 & \Omega\sigma_3 & \sigma_6 & \Omega\sigma_5 & \Omega\sigma_8 & \sigma_7 \\ \Omega\sigma_3 & \Omega\sigma_4 & \sigma_1 & \sigma_2 & \sigma_7 & \sigma_8 & \Omega\sigma_5 & \Omega\sigma_6 \\ \Omega\sigma_4 & \sigma_3 & \Omega\sigma_2 & \sigma_1 & \sigma_8 & \Omega\sigma_7 & \sigma_6 & \Omega\sigma_5 \\ \Omega\sigma_5 & \Omega\sigma_6 & \Omega\sigma_7 & \Omega\sigma_8 & \sigma_1 & \sigma_2 & \sigma_3 & \sigma_4 \\ \Omega\sigma_6 & \sigma_5 & \Omega\sigma_8 & \sigma_7 & \Omega\sigma_2 & \sigma_1 & \Omega\sigma_4 & \sigma_3 \\ \Omega\sigma_7 & \sigma_8 & \sigma_5 & \Omega\sigma_6 & \Omega\sigma_3 & \sigma_4 & \sigma_1 & \Omega\sigma_2 \\ \Omega\sigma_8 & \Omega\sigma_7 & \sigma_6 & \sigma_5 & \Omega\sigma_4 & \Omega\sigma_3 & \sigma_2 & \sigma_1 \end{pmatrix}$$

$$(12)$$

où $\sigma_1, \sigma_2, ..., \sigma_P$ sont les symboles d'information à transmettre, représentés sous la forme de vecteurs colonne de dimension 2 dont les composantes sont toutes nulles à l'exception d'une seule, égale à 1, définissant la position de modulation. $\Omega$ est la matrice de permutation $2 \times 2$, à savoir :

$$\Omega = \begin{pmatrix} 0 & 1 \\ 1 & 0 \end{pmatrix} \qquad (13)$$

autrement dit $\Omega$ est un opérateur qui permute les deux positions PPM d'un symbole. Par conséquent, si $\sigma$ est un symbole de l'alphabet de modulation PPM, $\Omega\sigma$ l'est également.

On notera que les matrices (12) sont de dimension $2P \times P$ et s'obtiennent formellement à partir des matrices des codes orthogonaux réels (5) en remplaçant le changement de signe par l'opérateur de permutation $\Omega$. Cet opérateur

permet d'introduire de manière très avantageuse une diversité spatio-temporelle sans recourir à un changement de signe, c'est-à-dire sans nécessiter d'extension de l'alphabet de modulation PPM. On constatera en effet que les composantes de la matrice **C** sont simplement des 0 et des 1 et non des valeurs signées. Ce code spatio-temporel se prête bien à la modulation d'un signal ultra-large bande.

Les matrices **C** sont définies à une permutation près de leurs lignes et/ou leurs colonnes. En effet, toute permutation sur les lignes (on entend ici par ligne, une ligne de vecteurs de dimension 2) et/ou les colonnes de **C** est un code spatio-temporel selon l'invention, une permutation sur les lignes équivalant à une permutation des instants d'utilisation du canal et une permutation sur les colonnes équivalant à une permutation des antennes de transmission. L'ordre des symboles d'information $\sigma_1,\sigma_2,...,\sigma_P$ est arbitraire, il ne préjuge pas de leurs positions respectives dans un bloc de $P$ symboles. Autrement dit, une permutation des symboles $\sigma_1,\sigma_2,...,\sigma_P$ dans les matrices (12) de modifie pas la définition du code spatio-temporel.

En outre, les matrices **C** possèdent chacune le même nombre de « 1 » dans chacune de ses colonnes, ce qui se traduit par une équirépartition avantageuse de l'énergie sur les différentes antennes.

Le code spatio-temporel **C** est aussi à plein débit puisque $P$ symboles d'information sont transmis pendant $P$ utilisations du canal. Son gain de codage est aussi plus élevé que ceux connus dans l'art antérieur.

On peut montrer que les codes spatio-temporels définis par les matrices (12), comme ceux définis par les matrices (5), sont à diversité maximale.

Par définition, on sait que le code est à diversité maximale si pour tout couple de matrices distinctes **C,C'** du code, $\Delta$**C=C-C'** est de rang plein, c'est-à-dire si :

$$\Delta \mathbf{C} = \mathbf{C} = \begin{pmatrix} \mathbf{a_1} & \mathbf{a_2} & \mathbf{a_3} & \mathbf{a_4} \\ \mathbf{\Omega a_2} & \mathbf{a_1} & \mathbf{\Omega a_4} & \mathbf{a_3} \\ \mathbf{\Omega a_3} & \mathbf{a_4} & \mathbf{a_1} & \mathbf{\Omega a_2} \\ \mathbf{\Omega a_4} & \mathbf{\Omega a_3} & \mathbf{a_2} & \mathbf{a_1} \end{pmatrix} \tag{14}$$

où $\mathbf{a_p}=\sigma_p-\sigma'_p$ pour $p=1,...,P$ est de rang plein.

Par construction, les vecteurs $\mathbf{a_p}$ ont, soit leurs deux composantes nulles, soit de signes opposés.

La matrice $\Delta$**C** peut s'écrire sous la forme développée :

$$\Delta \mathbf{C} = \begin{pmatrix} a_{1,0} & a_{2,0} & a_{3,0} & a_{4,0} \\ a_{1,1} & a_{2,1} & a_{3,1} & a_{4,1} \\ a_{2,1} & a_{1,0} & a_{4,1} & a_{3,0} \\ a_{2,0} & a_{1,1} & a_{4,0} & a_{3,1} \\ a_{3,1} & a_{4,0} & a_{1,0} & a_{2,1} \\ a_{3,0} & a_{4,1} & a_{1,1} & a_{2,0} \\ a_{4,1} & a_{3,1} & a_{2,0} & a_{1,0} \\ a_{4,0} & a_{3,0} & a_{2,1} & a_{1,1} \end{pmatrix} \tag{15}$$

avec $a_{\ell,m}=\sigma_{\ell,m}-\sigma'_{\ell,m}$, $\ell=1,2,3,4$, $m=0,1$ et $a_{\ell,m}\in\{-1,0,1\}$

La matrice $\Delta$**C** n'est pas à rang plein si ces deux vecteurs colonne sont colinéaires, c'est-à-dire compte tenu des valeurs de leurs composantes si ces vecteurs colonnes sont égaux ou opposés. Dans ce cas, étant donné que $a_{\ell,0}=a_{\ell,1}$ si et seulement si $a_{\ell,0}=a_{\ell,1}=0$, on vérifie sans peine que les vecteurs $\mathbf{a_1}$ et $\mathbf{a_2}$ sont nécessairement nuls, c'est-à-dire **C=C'**.

A titre d'exemple, nous détaillerons ci-après le procédé de transmission lorsque $P$=4, les cas $P$=2 et $P$=8 étant bien entendu similaires.

On suppose ici que le système utilise un signal TH-UWB, tel que défini en (6). Le code spatio-temporel module ce signal et est transmis pendant deux utilisations consécutives du canal (PCU). Pendant la première utilisation, les antennes $p=1,...,4$ transmettent respectivement les premières trames :

$$s^p(t) = \sum_{n=0}^{N_s-1} w(t - nT_s - c(n)T_c - \mu_p\varepsilon) \qquad (16)$$

Pendant la seconde utilisation du canal, les antennes $p=1,3$ transmettent les secondes trames :

$$s^p(t) = \sum_{n=0}^{N_s-1} w(t - nT_s - c(n)T_c - \overline{\mu}_p\varepsilon) \qquad (17)$$

où $\overline{\mu}_p$ est la position permutée de $\mu_p$, c'est-à-dire $\overline{\mu}_p=1$ si $\mu_p=0$ et $\overline{\mu}_p=0$ si $\overline{\mu}_p=1$, et les antennes $p=2,4$ transmettent les secondes trames :

$$s^p(t) = \sum_{n=0}^{N_s-1} w(t - nT_s - c(n)T_c - \mu_p\varepsilon) \qquad (18)$$

Les troisièmes et quatrièmes trames émises par les antennes s'obtiennent selon le même principe.

Il est clair pour l'homme du métier que l'on obtiendrait des expressions similaires en utilisant un signal DS-UWB selon l'expression (8) voire un signal DS-TH-UWB selon l'expression (10) au lieu d'un signal TH-UWB.

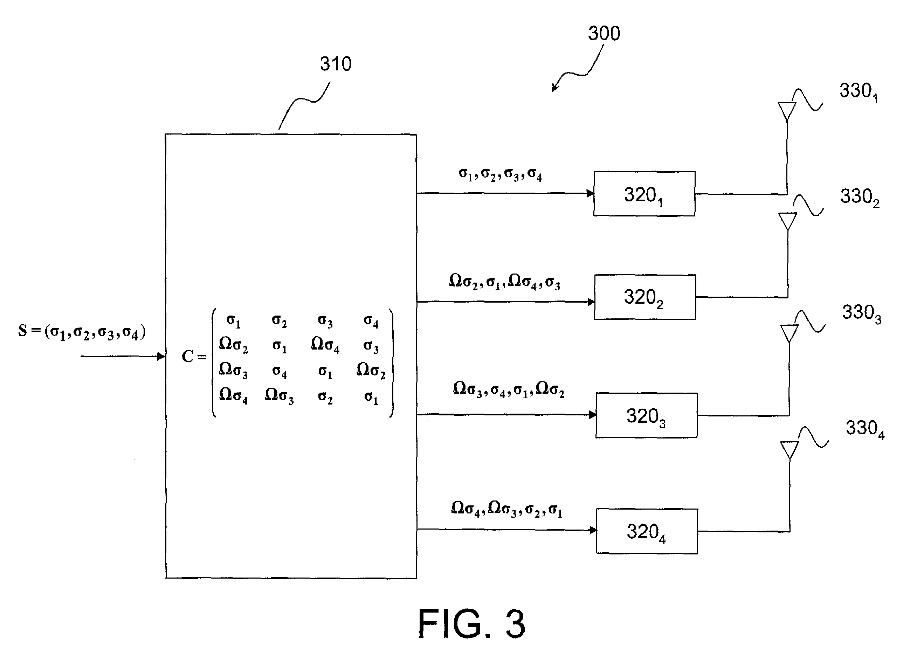

La Fig. 3 illustre un exemple de système de transmission utilisant le procédé de codage spatio-temporel selon l'invention.

On a illustré en Fig. 3 le cas où $P=4$, les cas $P=2$ et $P=8$ étant similaires.

Le système 300 reçoit des symboles d'information par bloc $\mathbf{S}=(\sigma_1,\sigma_2,\sigma_3,\sigma_4)$ où $\sigma_1,\sigma_2,\sigma_3,\sigma_4$ sont les symboles d'une constellation PPM à deux positions. Alternativement, les symboles d'information peuvent provenir d'une autre constellation binaire, par exemple des symboles binaires ou BPSK, à condition de subir préalablement un transcodage (*mapping*) dans ladite constellation PPM. Les symboles d'information peuvent être issus d'une ou d'une pluralité d'opérations bien connues de l'homme du métier telles que codage source, codage canal de type convolutionnel, par bloc ou bien encore turbocodage série ou parallèle, entrelacement, etc.

Le bloc de symboles d'information $\mathbf{S}=(\sigma_1,\sigma_2,\sigma_3,\sigma_4)$ subit une opération de codage dans le codeur spatio-temporel 310. Plus précisément, le module 310 calcule les coefficients de la matrice $\mathbf{C}$ obéissant à l'expression (12) pour $P=4$ ou à une variante obtenue par permutation de ses lignes et/ou ses colonnes comme indiqué précédemment. Les quatre vecteurs colonnes de la première ligne de $\mathbf{C}$, représentant quatre symboles PPM, sont transmis respectivement aux modulateurs UWB $320_1$, $320_2$, $320_3$, $320_4$, pour générer les premières trame, puis les quatre vecteurs colonnes de la seconde ligne de $\mathbf{C}$, pour générer les seconde trames, et ainsi de suite jusqu'aux quatrièmes trames.

Le modulateur UWB $320_1$ génère à partir des symboles PPM $\sigma_1,\sigma_2,\sigma_3,\sigma_4$, les signaux UWB impulsionnels modulés correspondants. De même, le modulateur UWB $320_2$ en fait de même à partir des vecteurs $\Omega\sigma_2,\sigma_1,\Omega\sigma_4,\sigma_3$, ainsi que le modulateur UWB $320_3$ avec $\Omega\sigma_3,\sigma_4,\sigma_1,\Omega\sigma_2$ et le modulateur $320_4$ avec $\Omega\sigma_4,\Omega\sigma_3,\sigma_2,\sigma_1$.

Bien que moins avantageux dans le cadre de la présente invention, les signaux UWB impulsionnels servant de support à la modulation peuvent être alternativement du type DS-UWB ou TH-DS-UWB. Dans tous les cas, les signaux UWB impulsionnels ainsi modulés sont transmis ensuite aux éléments radiatifs $330_1$ à $330_4$. Ces éléments radiatifs peuvent être des antennes UWB ou bien des diodes laser ou des DELs, fonctionnant par exemple dans le domaine infrarouge, associées à des modulateurs électro-optiques. Le système de transmission proposé peut alors être utilisé dans le domaine des télécommunications optiques sans fil.

Les signaux UWB transmis par le système illustré en Fig. 3 peuvent être reçus et traités par un récepteur multi-antenne selon un procédé de décodage exposé ci-après.

Le procédé de décodage selon l'invention permet d'estimer de manière simple et robuste les symboles d'information émis à partir des signaux UWB reçus par un récepteur multi-antenne de type Rake et, ce, de manière beaucoup plus simple que les algorithmes de décodage par sphère conventionnels.

Nous supposerons dans la suite, que le canal de transmission entre l'émetteur et le récepteur présente une réponse impulsionnelle plus courte que la séparation temporelle des deux positions de modulation, autrement dit ε. Cette hypothèse sera en pratique réalisée dès que l'on aura pris la précaution de choisir ε suffisamment grand pour respecter cette contrainte dans les conditions de multitrajet statistiquement significatives. Lorsque la transmission se fait par voie optique, l'étalement temporel du canal est généralement négligeable. On s'assurera cependant que la durée des impulsions lumineuses est plus courte que ε .

Sous l'hypothèse précédente, une impulsion d'un signal UWB, émise en une première position de modulation et ayant parcouru un premier trajet ne pourra être confondue avec une impulsion du même signal ayant parcouru un second trajet, autrement dit il n'y aura pas d'interférence multi-trajet entre positions de modulation.

Nous supposerons également que le récepteur est du type multi-antenne et de type Rake. Plus précisément, chaque antenne, 1,...,$Q$ fournit le signal qu'elle reçoit à un récepteur Rake qui lui est associé. Chaque récepteur Rake possède 2$L$ doigts, c'est-à-dire 2$L$ filtres adaptés aux $L$ trajets et aux deux positions de modulation pour chaque trajet. Les sorties des 2$QL$ doigts des récepteurs Rake, pour les $Q$ antennes, sont les variables de décision utilisées par le récepteur. Ces 2$QL$ variables de décision sont observées pendant $P$ intervalles correspondants aux $P$ trames transmises. En définitive, l'ensemble de ces observations peut être représenté par une matrice **X** de taille 2$QL{\times}P$ constituant un résumé exhaustif du signal reçu pendant les $P$ intervalles et pouvant s'exprimer sous la forme :

$$\mathbf{X} = \mathbf{HC} + \mathbf{N} \tag{19}$$

où **C** est la matrice de taille 2$P{\times}P$ du code spatio-temporel utilisé par le système de transmission, telle que donnée par (12) ou une version équivalente par permutation de lignes et/ou colonnes ; **N** est une matrice de taille 2$QL{\times}P$, représentant les échantillons de bruit en sortie des 2$QL$ doigts pour les $P$ intervalles d'observation ; **H** est la matrice du canal de transmission, de taille 2$QL{\times}2P$. Nous supposerons que le récepteur est cohérent, c'est-à-dire qu'il est capable d'effectuer une estimation du canal, par exemple grâce à des symboles pilotes transmis via les $P$ antennes de transmission. De manière générale, le récepteur pourra estimer la matrice de canal **H** par une estimation de canal multiantenne classique.

L'expression (19) peut s'écrire de manière équivalente sous la forme vectorielle :

$$\mathbf{Y} = \mathbf{vec}\left(\mathbf{X}\right) = \left(\mathbf{I_P} \otimes \mathbf{H}\right)\mathbf{vec}\left(\mathbf{C}\right) + \mathbf{vec}\left(\mathbf{N}\right) \tag{20}$$

où pour une matrice quelconque, **A,** de taille $P{\times}R$ **vec(A)** est le vecteur de taille $PR$ obtenu en concaténant verticalement, l'un après l'autre, les vecteurs colonne de la matrice **A,** et où $\otimes$ est le produit de Kronecker.

Le vecteur **vec(C)** peut s'exprimer en fonction du vecteur σ, de taille 2$P$, obtenu en concaténant verticalement les vecteurs $\sigma_1, \sigma_2, ..., \sigma_P$, soit :

$$\mathbf{vec}\left(\mathbf{C}\right) = \mathbf{\Phi}\left(\mathbf{\Omega}\right)\mathbf{\sigma} \tag{21}$$

où $\Phi(\Omega)$ est une matrice de taille 2$P^2{\times}2P$ donnant la dépendance linéaire entre les symboles codés spatio-temporellement et les symboles d'information, soit :

pour P = 2 ,

$$\Phi(\Omega) = \begin{pmatrix} \mathbf{I_2} & \mathbf{O_2} \\ \mathbf{O_2} & \Omega \\ \mathbf{O_2} & \mathbf{I_2} \\ \mathbf{I_2} & \mathbf{O_2} \end{pmatrix}$$

où $\mathbf{O_2}$, $\mathbf{I_2}$ et $\Omega$ sont respectivement les matrices nulle, unité et de permutation de taille $2\times2$,

pour $P=4$,

$$\Phi(\Omega) = \begin{pmatrix} \mathbf{I_2} & \mathbf{O_2} & \mathbf{O_2} & \mathbf{O_2} \\ \mathbf{O_2} & \Omega & \mathbf{O_2} & \mathbf{O_2} \\ \mathbf{O_2} & \mathbf{O_2} & \Omega & \mathbf{O_2} \\ \mathbf{O_2} & \mathbf{O_2} & \mathbf{O_2} & \Omega \\ \mathbf{O_2} & \mathbf{I_2} & \mathbf{O_2} & \mathbf{O_2} \\ \mathbf{I_2} & \mathbf{O_2} & \mathbf{O_2} & \mathbf{O_2} \\ \mathbf{O_2} & \mathbf{O_2} & \mathbf{O_2} & \mathbf{I_2} \\ \mathbf{O_2} & \mathbf{O_2} & \Omega & \mathbf{O_2} \\ \mathbf{O_2} & \mathbf{O_2} & \mathbf{I_2} & \mathbf{O_2} \\ \mathbf{O_2} & \mathbf{O_2} & \mathbf{O_2} & \Omega \\ \mathbf{I_2} & \mathbf{O_2} & \mathbf{O_2} & \mathbf{O_2} \\ \mathbf{O_2} & \mathbf{I_2} & \mathbf{O_2} & \mathbf{O_2} \\ \mathbf{O_2} & \mathbf{O_2} & \mathbf{O_2} & \mathbf{I_2} \\ \mathbf{O_2} & \mathbf{O_2} & \mathbf{I_2} & \mathbf{O_2} \\ \mathbf{O_2} & \Omega & \mathbf{O_2} & \mathbf{O_2} \\ \mathbf{I_2} & \mathbf{O_2} & \mathbf{O_2} & \mathbf{O_2} \end{pmatrix}$$

$$(22)$$

la matrice $\Phi(\Omega)$, pour $P=8$, s'obtenant de la même façon, à partir de l'expression (12) de $\mathbf{C}$ . Par exemple, on comprendra que les $(9k+1)^{ième}$, $k=0,..,7$ vecteurs ligne de $\Phi(\Omega)$ seront $(\mathbf{I_2}\ \mathbf{O_2}\ \mathbf{O_2}\ \mathbf{O_2}\ \mathbf{O_2}\ \mathbf{O_2}\ \mathbf{O_2}\ \mathbf{O_2})$ et l'avant-dernier sera $(\mathbf{O_2}\ \Omega\ \mathbf{O_2}\ \mathbf{O_2}\ \mathbf{O_2}\ \mathbf{O_2}\ \mathbf{O_2}\ \mathbf{O_2})$. L'ensemble des vecteurs ligne de $\Phi(\Omega)$ est donné en annexe.

Etant donné que pour un symbole 2-PPM quelconque $\sigma_\mathbf{p}$ on a :

$$\Omega\sigma_\mathbf{p} = -\sigma_\mathbf{p} + \mathbf{1_2}$$

$$(23)$$

où $\mathbf{1_2} = (1\ 1)^T$, le vecteur $\Phi(\Omega)\sigma$ peut s'exprimer de la manière suivante :

$$\Phi(\Omega)\sigma = \Phi(-\mathbf{I_2})\sigma + \Gamma \qquad (24)$$

où $\Phi(\mathbf{-I_2})$ est la matrice obtenue en remplaçant $\Omega$ par $\mathbf{-I_2}$ et $\Gamma$ est un vecteur de taille $2P^2$, constant, c'est-à-dire indépendant des symboles d'information. Le vecteur $\Gamma$ est obtenu à partir de la matrice de code spatio-temporel **C** en remplaçant les symboles d'information $\sigma_\mathbf{p}$ par $\mathbf{0_2}=(0\ 0)^T$ et les symboles à positions permutées $\Omega\sigma_\mathbf{p}$ par $\mathbf{1_2}$. Plus précisément :

$$\Gamma = \mathbf{vec}\left(\mathbf{C^0}\right) \qquad (25)$$

avec, pour $P=2$,

$$\mathbf{C^0} = \begin{pmatrix} \mathbf{0_2} & \mathbf{0_2} \\ \mathbf{1_2} & \mathbf{0_2} \end{pmatrix},$$

pour $P = 4$ ,

$$\mathbf{C^0} = \begin{pmatrix} \mathbf{0_2} & \mathbf{0_2} & \mathbf{0_2} & \mathbf{0_2} \\ \mathbf{1_2} & \mathbf{0_2} & \mathbf{1_2} & \mathbf{0_2} \\ \mathbf{1_2} & \mathbf{0_2} & \mathbf{0_2} & \mathbf{1_2} \\ \mathbf{1_2} & \mathbf{1_2} & \mathbf{0_2} & \mathbf{0_2} \end{pmatrix}$$

et enfin, pour $P=8$,

$$\mathbf{C^0} = \begin{pmatrix} \mathbf{0_2} & \mathbf{0_2} & \mathbf{0_2} & \mathbf{0_2} & \mathbf{0_2} & \mathbf{0_2} & \mathbf{0_2} & \mathbf{0_2} \\ \mathbf{1_2} & \mathbf{0_2} & \mathbf{0_2} & \mathbf{1_2} & \mathbf{0_2} & \mathbf{1_2} & \mathbf{1_2} & \mathbf{0_2} \\ \mathbf{1_2} & \mathbf{1_2} & \mathbf{0_2} & \mathbf{0_2} & \mathbf{0_2} & \mathbf{0_2} & \mathbf{1_2} & \mathbf{1_2} \\ \mathbf{1_2} & \mathbf{1_2} & \mathbf{1_2} & \mathbf{0_2} & \mathbf{0_2} & \mathbf{1_2} & \mathbf{0_2} & \mathbf{1_2} \\ \mathbf{1_2} & \mathbf{1_2} & \mathbf{1_2} & \mathbf{1_2} & \mathbf{0_2} & \mathbf{0_2} & \mathbf{0_2} & \mathbf{0_2} \\ \mathbf{1_2} & \mathbf{0_2} & \mathbf{1_2} & \mathbf{0_2} & \mathbf{1_2} & \mathbf{0_2} & \mathbf{1_2} & \mathbf{0_2} \\ \mathbf{1_2} & \mathbf{0_2} & \mathbf{0_2} & \mathbf{1_2} & \mathbf{1_2} & \mathbf{0_2} & \mathbf{0_2} & \mathbf{1_2} \\ \mathbf{1_2} & \mathbf{1_2} & \mathbf{0_2} & \mathbf{0_2} & \mathbf{1_2} & \mathbf{1_2} & \mathbf{0_2} & \mathbf{0_2} \end{pmatrix}$$

$$(26)$$

Par ailleurs, la matrice $\Phi(\mathbf{-I_2})$ dans l'équation (24) peut encore s'exprimer sous la forme suivante, en exploitant sa forme par blocs :

$$\Phi\left(-\mathbf{I}_2\right) = \varphi \otimes \mathbf{I}_2 \qquad\qquad (27)$$

où $\varphi$ est une matrice de taille $P^2 \times P$, obtenue de manière formelle en remplaçant dans les matrices (22), $\mathbf{O}_2$ par 0, $\mathbf{I}_2$ par 1 et $\Omega$ par -1. Par exemple,
pour $P$=2,

$$\varphi = \begin{pmatrix} 1 & 0 \\ 0 & -1 \\ 0 & 1 \\ 1 & 0 \end{pmatrix}$$

pour P = 4 ,

$$\varphi = \begin{pmatrix} 1 & 0 & 0 & 0 \\ 0 & -1 & 0 & 0 \\ 0 & 0 & 0 & 0 \\ 0 & 0 & 0 & -1 \\ 0 & 1 & 0 & 0 \\ 1 & 0 & 0 & 0 \\ 0 & 0 & 0 & 1 \\ 0 & 0 & -1 & 0 \\ 0 & 0 & 1 & 0 \\ 0 & 0 & 0 & -1 \\ 1 & 0 & 0 & 0 \\ 0 & 1 & 0 & 0 \\ 0 & 0 & 0 & 1 \\ 0 & 0 & 1 & 0 \\ 0 & -1 & 0 & 0 \\ 1 & 0 & 0 & 0 \end{pmatrix}$$

Pour $P$=8, les vecteurs ligne de $\varphi$ sont donnés en annexe.
En combinant les équations (20), (21), (24), et (27), il en résulte :

$$\mathbf{Y} = \left(\mathbf{I_P} \otimes \mathbf{H}\right)\left(\boldsymbol{\varphi} \otimes \mathbf{I_2} + \boldsymbol{\Gamma}\right) + \mathbf{vec}\left(\mathbf{N}\right) \qquad (28)$$

Etant donné l'absence d'interférence multi-trajet entre les deux positions PPM, la matrice de canal peut se factoriser par :

$$\mathbf{H} = \mathbf{h} \otimes \mathbf{I_2} \qquad (29)$$

où **h** est une matrice de taille $QL \times P$. L'expression (28) devient alors :

$$\mathbf{Y} = \left(\mathbf{I_P} \otimes \left(\mathbf{h} \otimes \mathbf{I_2}\right)\right)\left(\left(\boldsymbol{\varphi} \otimes \mathbf{I_2}\right)\boldsymbol{\sigma} + \boldsymbol{\Gamma}\right) + \mathbf{vec}\left(\mathbf{N}\right) \qquad (30)$$

Si l'on définit **Z=Y-(I_P⊗h⊗I_2)Γ**, on obtient, grâce à l'associativité du produit de Kronecker :

$$\mathbf{Z} = \left(\left(\mathbf{I_P} \otimes \mathbf{h}\right) \otimes \mathbf{I_2}\right)\left(\boldsymbol{\varphi} \otimes \mathbf{I_2}\right)\boldsymbol{\sigma} + \mathbf{vec}\left(\mathbf{N}\right) \qquad (31)$$

c'est-à-dire :

$$\mathbf{Z} = \left(\left(\mathbf{I_P} \otimes \mathbf{h}\right)\boldsymbol{\varphi} \otimes \mathbf{I_2}\right)\boldsymbol{\sigma} + \mathbf{vec}\left(\mathbf{N}\right) \qquad (32)$$

et si l'on note **h$_\varphi$=(I_P⊗h)**$\varphi$ :

$$\mathbf{Z} = \left(\mathbf{h}_\varphi \otimes \mathbf{I_2}\right)\boldsymbol{\sigma} + \mathbf{vec}\left(\mathbf{N}\right) \qquad (33)$$

On peut montrer que **h$_\varphi$** est une matrice de taille $PQL \times P$ vérifiant :

$$\mathbf{h}_\varphi^{\mathbf{H}}\mathbf{h}_\varphi = \alpha\mathbf{I_P} \qquad (34)$$

où  $\mathbf{h}_\varphi^{\mathbf{H}}$  est la transposée conjuguée de **h$_\varphi$** et $\alpha$ est un nombre réel positif.

Il résulte de (33) et (34) que l'orthogonalité du code spatio-temporel tel que défini en (12) est conservée au niveau du récepteur.

Le procédé de décodage du code spatio-temporel, c'est-à-dire d'estimation des symboles d'information émis à partir du vecteur **Y** des variables de décision, comprend les étapes suivantes :

A partir du vecteur des variables de décision **Y** et de la matrice du canal **H,** estimée par le récepteur, on calcule :

$$\mathbf{Z} = \mathbf{Y} - \left(\mathbf{I_P} \otimes \mathbf{H}\right)\boldsymbol{\Gamma} \qquad (35)$$

où $\Gamma$**=vec(C$^0$)** est une constante qui ne dépend que du code et est donc connue du récepteur.

A partir de la matrice de **Z** et de la matrice $\mathbf{h}_\varphi$ obtenue par $\mathbf{h}_\varphi$=(**I$_P$**$\otimes$**h**)$\varphi$ où **H=h**$\otimes$**I$_2$,** on calcule la projection dans un espace de signaux orthogonalisés :

$$\tilde{\mathbf{Z}} = \left(\mathbf{h}_\varphi^{\mathrm{H}} \otimes \mathbf{I_2}\right)\mathbf{Z} \qquad (36)$$

Enfin, le $p^{ième}$ symbole d'information transmis, $\sigma_\mathbf{p}$ est obtenu en déterminant :

$$\hat{m}_p = \arg\max_{m=0,1}\left(\tilde{Z}_{2p+m-1}\right) \qquad (37)$$

où $\hat{\tilde{Z}}_{2p+m\text{-}1}$ est la $(2_{p+m}$-1)$^{ième}$ composante du vecteur $\tilde{\mathbf{Z}}$ et où $\hat{m}_p$ donne la position de modulation PPM de l'estimée $\hat{\sigma}_\mathbf{p}$ , c'est-à-dire $\hat{\sigma}_\mathbf{p}$=($\delta(\hat{m}_p),\delta(\hat{m}_p$-1))$^T$ où $\delta(.)$ est la distribution de Dirac.

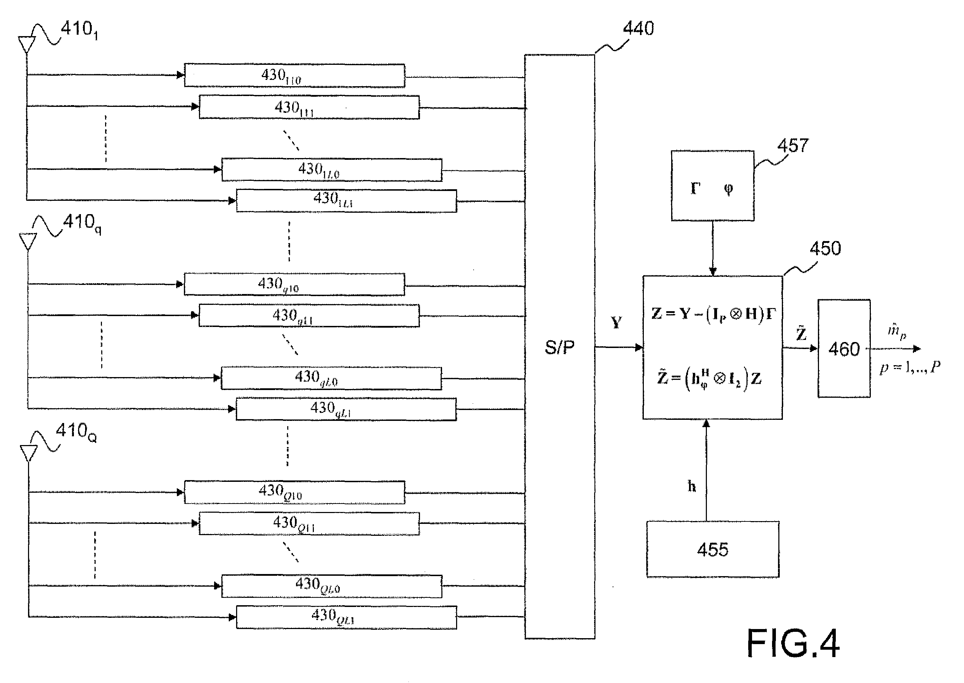

La Fig. 4 représente un dispositif de réception selon un mode de réalisation de l'invention. Ce dispositif permet d'estimer les symboles d'information $\sigma_\mathbf{1},\sigma_\mathbf{2},...,\sigma_\mathbf{P}$ émis par le dispositif de transmission précédemment décrit, par exemple celui illustré en Fig. 3 pour *P*=4.

Le dispositif comprend une pluralité *Q* d'antennes 410$_1$,410$_2$,...,410$_Q$ ou bien, pour un dispositif optique, une pluralité de photodétecteurs.

Chaque antenne 410$_q$ est connectée à un récepteur Rake 420$_q$ possédant une pluralité 2*L* de doigts 430$_{q\ell m}$ $\ell$=1,...,2*L*, les doigts 430$_{q\ell m}$ pour *q*=1,..,*Q* et étant associés à un trajet $\ell$ et à une position d'impulsion *m*. Les sorties $y_{q\ell m}$ des 2*QL* doigts sont fournies à un convertisseur série/parallèle 440 comme vecteur **y'** dont les composantes sont $y'_{(2\ell+m\text{-}1)+2qL}=y_{qm\ell}$. Les vecteurs **y'$_1$,...,y'$_P$** observés pour les *P* intervalles de transmission sont concaténés en un vecteur **Y** de taille 2*QLP* par le convertisseur série parallèle 440.

Les moyens de calcul 450 reçoivent d'une part le vecteur **Y** du convertisseur série/parallèle 440 et la matrice réduite **h** de l'estimateur de canal 455. D'autre part les composantes du vecteur $\Gamma$ ainsi que de la matrice $\varphi$ sont stockées dans une mémoire 457. Les moyens de calcul effectuent les opérations (35) puis (37), c'est-à-dire **Z=Y-(I$_P$$\otimes$H)**$\Gamma$ et

$$\tilde{\mathbf{Z}} = \left(\mathbf{h}_\varphi^{\mathrm{H}} \otimes \mathbf{I_2}\right)\mathbf{Z}$$ avec **h**$\varphi$=(**I$_P$**$\otimes$**h**)$\varphi$ et **H=h**$\otimes$**I$_2$.** Enfin, les 2*P* composantes de $\tilde{\mathbf{Z}}$ sont fournies à un comparateur 460 qui détermine, pour chaque *p*=1,...,*P*, $\tilde{Z}_{2p\text{-}1}$ et $\tilde{Z}_{2p}$, pour en déduire $\hat{m}_p = \arg\max\limits_{m=0,1}\left(\tilde{Z}_{2p+m-1}\right)$ et en déduire l'estimée $\hat{\sigma}_\mathbf{p}$.

## Annexe

Les 64 vecteurs ligne de la matrice $\varphi$ pour *P*=8 sont donnés ci-après. Ils sont notés $\mathbf{v}_\varphi^\mathbf{1}$ à $\mathbf{v}_\varphi^\mathbf{64}$ :

$$\mathbf{v}_\varphi^1 = \begin{pmatrix} 1 & 0 & 0 & 0 & 0 & 0 & 0 & 0 \end{pmatrix} \; ;$$

$$\mathbf{v}_\varphi^2 = \begin{pmatrix} 0 & -1 & 0 & 0 & 0 & 0 & 0 & 0 \end{pmatrix} \; ;$$

$$\mathbf{v}_\varphi^3 = \begin{pmatrix} 0 & 0 & -1 & 0 & 0 & 0 & 0 & 0 \end{pmatrix} \; ;$$

$$\mathbf{v}_\varphi^4 = \begin{pmatrix} 0 & 0 & 0 & -1 & 0 & 0 & 0 & 0 \end{pmatrix} \; ;$$

$$\mathbf{v}_\varphi^5 = \begin{pmatrix} 0 & 0 & 0 & 0 & -1 & 0 & 0 & 0 \end{pmatrix} \; ;$$

$$\mathbf{v}_\varphi^6 = \begin{pmatrix} 0 & 0 & 0 & 0 & 0 & -1 & 0 & 0 \end{pmatrix} \; ;$$

$$\mathbf{v}_\varphi^7 = \begin{pmatrix} 0 & 0 & 0 & 0 & 0 & 0 & -1 & 0 \end{pmatrix} \; ;$$

$$\mathbf{v}_\varphi^8 = \begin{pmatrix} 0 & 0 & 0 & 0 & 0 & 0 & 0 & -1 \end{pmatrix} \; ;$$

$$\mathbf{v}_\varphi^9 = \begin{pmatrix} 0 & 1 & 0 & 0 & 0 & 0 & 0 & 0 \end{pmatrix} \; ;$$

$$\mathbf{v}_\varphi^{10} = \begin{pmatrix} 1 & 0 & 0 & 0 & 0 & 0 & 0 & 0 \end{pmatrix} \; ;$$

$$\mathbf{v}_\varphi^{11} = \begin{pmatrix} 0 & 0 & 0 & -1 & 0 & 0 & 0 & 0 \end{pmatrix} \; ;$$

$$\mathbf{v}_\varphi^{12} = \begin{pmatrix} 0 & 0 & 1 & 0 & 0 & 0 & 0 & 0 \end{pmatrix} \; ;$$

$$\mathbf{v}_\varphi^{13} = \begin{pmatrix} 0 & 0 & 0 & 0 & 0 & -1 & 0 & 0 \end{pmatrix} \; ;$$

$$\mathbf{v}_\varphi^{14} = \begin{pmatrix} 0 & 0 & 0 & 0 & 1 & 0 & 0 & 0 \end{pmatrix} \; ;$$

$$\mathbf{v}_{\varphi}^{15} = \begin{pmatrix} 0 & 0 & 0 & 0 & 0 & 0 & 0 & 1 \end{pmatrix} \ ;$$

$$\mathbf{v}_{\varphi}^{16} = \begin{pmatrix} 0 & 0 & 0 & 0 & 0 & 0 & -1 & 0 \end{pmatrix} \ ;$$

$$\mathbf{v}_{\varphi}^{17} = \begin{pmatrix} 0 & 0 & 1 & 0 & 0 & 0 & 0 & 0 \end{pmatrix} \ ;$$

$$\mathbf{v}_{\varphi}^{18} = \begin{pmatrix} 0 & 0 & 0 & 1 & 0 & 0 & 0 & 0 \end{pmatrix} \ ;$$

$$\mathbf{v}_{\varphi}^{19} = \begin{pmatrix} 1 & 0 & 0 & 0 & 0 & 0 & 0 & 0 \end{pmatrix} \ ;$$

$$\mathbf{v}_{\varphi}^{20} = \begin{pmatrix} 0 & -1 & 0 & 0 & 0 & 0 & 0 & 0 \end{pmatrix} \ ;$$

$$\mathbf{v}_{\varphi}^{21} = \begin{pmatrix} 0 & 0 & 0 & 0 & 0 & 0 & -1 & 0 \end{pmatrix} \ ;$$

$$\mathbf{v}_{\varphi}^{22} = \begin{pmatrix} 0 & 0 & 0 & 0 & 0 & 0 & 0 & -1 \end{pmatrix} \ ;$$

$$\mathbf{v}_{\varphi}^{23} = \begin{pmatrix} 0 & 0 & 0 & 0 & 1 & 0 & 0 & 0 \end{pmatrix} \ ;$$

$$\mathbf{v}_{\varphi}^{24} = \begin{pmatrix} 0 & 0 & 0 & 0 & 0 & 1 & 0 & 0 \end{pmatrix} \ ;$$

$$\mathbf{v}_{\varphi}^{25} = \begin{pmatrix} 0 & 0 & 0 & 1 & 0 & 0 & 0 & 0 \end{pmatrix} \ ;$$

$$\mathbf{v}_{\varphi}^{26} = \begin{pmatrix} 0 & 0 & -1 & 0 & 0 & 0 & 0 & 0 \end{pmatrix} \ ;$$

$$\mathbf{v}_{\varphi}^{27} = \begin{pmatrix} 0 & 1 & 0 & 0 & 0 & 0 & 0 & 0 \end{pmatrix} \ ;$$

$$\mathbf{v}_{\varphi}^{28} = \begin{pmatrix} 1 & 0 & 0 & 0 & 0 & 0 & 0 & 0 \end{pmatrix} \ ;$$

$$\mathbf{v}_\varphi^{29} = \begin{pmatrix} 0 & 0 & 0 & 0 & 0 & 0 & 0 & -1 \end{pmatrix} \quad ;$$

$$\mathbf{v}_\varphi^{30} = \begin{pmatrix} 0 & 0 & 0 & 0 & 0 & 0 & 1 & 0 \end{pmatrix} \quad ;$$

$$\mathbf{v}_\varphi^{31} = \begin{pmatrix} 0 & 0 & 0 & 0 & 0 & -1 & 0 & 0 \end{pmatrix} \quad ;$$

$$\mathbf{v}_\varphi^{32} = \begin{pmatrix} 0 & 0 & 0 & 0 & -1 & 0 & 0 & 0 \end{pmatrix} \quad ;$$

$$\mathbf{v}_\varphi^{33} = \begin{pmatrix} 0 & 0 & 0 & 0 & 1 & 0 & 0 & 0 \end{pmatrix} \quad ;$$

$$\mathbf{v}_\varphi^{34} = \begin{pmatrix} 0 & 0 & 0 & 0 & 0 & 1 & 0 & 0 \end{pmatrix} \quad ;$$

$$\mathbf{v}_\varphi^{35} = \begin{pmatrix} 0 & 0 & 0 & 0 & 0 & 0 & 1 & 0 \end{pmatrix} \quad ;$$

$$\mathbf{v}_\varphi^{36} = \begin{pmatrix} 0 & 0 & 0 & 0 & 0 & 0 & 0 & 1 \end{pmatrix} \quad ;$$

$$\mathbf{v}_\varphi^{37} = \begin{pmatrix} 1 & 0 & 0 & 0 & 0 & 0 & 0 & 0 \end{pmatrix} \quad ;$$

$$\mathbf{v}_\varphi^{38} = \begin{pmatrix} 0 & -1 & 0 & 0 & 0 & 0 & 0 & 0 \end{pmatrix} \quad ;$$

$$\mathbf{v}_\varphi^{39} = \begin{pmatrix} 0 & 0 & -1 & 0 & 0 & 0 & 0 & 0 \end{pmatrix} \quad ;$$

$$\mathbf{v}_\varphi^{40} = \begin{pmatrix} 0 & 0 & 0 & -1 & 0 & 0 & 0 & 0 \end{pmatrix} \quad ;$$

$$\mathbf{v}_\varphi^{41} = \begin{pmatrix} 0 & 0 & 0 & 0 & 0 & 1 & 0 & 0 \end{pmatrix} \quad ;$$

$$\mathbf{v}_\varphi^{42} = \begin{pmatrix} 0 & 0 & 0 & 0 & -1 & 0 & 0 & 0 \end{pmatrix} \quad ;$$

$$\mathbf{v}_{\varphi}^{43} = \begin{pmatrix} 0 & 0 & 0 & 0 & 0 & 0 & 0 & 1 \end{pmatrix} \; ;$$

$$\mathbf{v}_{\varphi}^{44} = \begin{pmatrix} 0 & 0 & 0 & 0 & 0 & 0 & -1 & 0 \end{pmatrix} \; ;$$

$$\mathbf{v}_{\varphi}^{45} = \begin{pmatrix} 0 & 1 & 0 & 0 & 0 & 0 & 0 & 0 \end{pmatrix} \; ;$$

$$\mathbf{v}_{\varphi}^{46} = \begin{pmatrix} 1 & 0 & 0 & 0 & 0 & 0 & 0 & 0 \end{pmatrix} \; ;$$

$$\mathbf{v}_{\varphi}^{47} = \begin{pmatrix} 0 & 0 & 0 & 1 & 0 & 0 & 0 & 0 \end{pmatrix} \; ;$$

$$\mathbf{v}_{\varphi}^{48} = \begin{pmatrix} 0 & 0 & -1 & 0 & 0 & 0 & 0 & 0 \end{pmatrix} \; ;$$

$$\mathbf{v}_{\varphi}^{49} = \begin{pmatrix} 0 & 0 & 0 & 0 & 0 & 0 & 1 & 0 \end{pmatrix} \; ;$$

$$\mathbf{v}_{\varphi}^{50} = \begin{pmatrix} 0 & 0 & 0 & 0 & 0 & 0 & 0 & -1 \end{pmatrix} \; ;$$

$$\mathbf{v}_{\varphi}^{51} = \begin{pmatrix} 0 & 0 & 0 & 0 & -1 & 0 & 0 & 0 \end{pmatrix} \; ;$$

$$\mathbf{v}_{\varphi}^{52} = \begin{pmatrix} 0 & 0 & 0 & 0 & 0 & 1 & 0 & 0 \end{pmatrix} \; ;$$

$$\mathbf{v}_{\varphi}^{53} = \begin{pmatrix} 0 & 0 & 1 & 0 & 0 & 0 & 0 & 0 \end{pmatrix} \; ;$$

$$\mathbf{v}_{\varphi}^{54} = \begin{pmatrix} 0 & 0 & 0 & -1 & 0 & 0 & 0 & 0 \end{pmatrix} \; ;$$

$$\mathbf{v}_{\varphi}^{55} = \begin{pmatrix} 1 & 0 & 0 & 0 & 0 & 0 & 0 & 0 \end{pmatrix} \; ;$$

$$\mathbf{v}_{\varphi}^{56} = \begin{pmatrix} 0 & 1 & 0 & 0 & 0 & 0 & 0 & 0 \end{pmatrix} \; ;$$

$$\mathbf{v}_{\varphi}^{57} = \begin{pmatrix} 0 & 0 & 0 & 0 & 0 & 0 & 0 & 1 \end{pmatrix} \; ;$$

$$\mathbf{v}_{\varphi}^{58} = \begin{pmatrix} 0 & 0 & 0 & 0 & 0 & 0 & 1 & 0 \end{pmatrix} \; ;$$

$$\mathbf{v}_{\varphi}^{59} = \begin{pmatrix} 0 & 0 & 0 & 0 & 0 & 61 & 0 & 0 \end{pmatrix} \; ;$$

$$\mathbf{v}_{\varphi}^{60} = \begin{pmatrix} 0 & 0 & 0 & 0 & -1 & 0 & 0 & 0 \end{pmatrix} \; ;$$

$$\mathbf{v}_{\varphi}^{61} = \begin{pmatrix} 0 & 0 & 0 & 1 & 0 & 0 & 0 & 0 \end{pmatrix} \; ;$$

$$\mathbf{v}_{\varphi}^{62} = \begin{pmatrix} 0 & 0 & 1 & 0 & 0 & 0 & 0 & 0 \end{pmatrix} \; ;$$

$$\mathbf{v}_{\varphi}^{63} = \begin{pmatrix} 0 & 1 & 0 & 0 & 0 & 0 & 0 & 0 \end{pmatrix} \; ;$$

$$\mathbf{v}_{\varphi}^{64} = \begin{pmatrix} 1 & 0 & 0 & 0 & 0 & 0 & 0 & 0 \end{pmatrix} .$$

**Revendications**

1. Procédé de codage spatio-temporel pour un système de transmission UWB comprenant une pluralité *P* d'éléments radiatifs, avec *P*=4 ou 8, ledit procédé codant un bloc de symboles d'information **S=($\sigma_1$,$\sigma_2$,...,$\sigma_P$)** appartenant à un alphabet de modulation 2-PPM, en une séquence de vecteurs, les composantes d'un vecteur étant destinées à moduler en position un signal UWB impulsionnel pour un élément radiatif dudit système et une utilisation de canal de transmission donnés, chaque composante correspondant à une position de modulation PPM, **caractérisé en ce que** lesdits vecteurs sont obtenus à partir des éléments de la matrice :

$$\mathbf{C} = \begin{pmatrix} \sigma_1 & \sigma_2 & \sigma_3 & \sigma_4 \\ \Omega\sigma_2 & \sigma_1 & \Omega\sigma_4 & \sigma_3 \\ \Omega\sigma_3 & \sigma_4 & \sigma_1 & \Omega\sigma_2 \\ \Omega\sigma_4 & \Omega\sigma_3 & \sigma_2 & \sigma_1 \end{pmatrix}$$

pour *P*=4,

$$C = \begin{pmatrix} \sigma_1 & \sigma_2 & \sigma_3 & \sigma_4 & \sigma_5 & \sigma_6 & \sigma_7 & \sigma_8 \\ \Omega\sigma_2 & \sigma_1 & \sigma_4 & \Omega\sigma_3 & \sigma_6 & \Omega\sigma_5 & \Omega\sigma_8 & \sigma_7 \\ \Omega\sigma_3 & \Omega\sigma_4 & \sigma_1 & \sigma_2 & \sigma_7 & \sigma_8 & \Omega\sigma_5 & \Omega\sigma_6 \\ \Omega\sigma_4 & \sigma_3 & \Omega\sigma_2 & \sigma_1 & \sigma_8 & \Omega\sigma_7 & \sigma_6 & \Omega\sigma_5 \\ \Omega\sigma_5 & \Omega\sigma_6 & \Omega\sigma_7 & \Omega\sigma_8 & \sigma_1 & \sigma_2 & \sigma_3 & \sigma_4 \\ \Omega\sigma_6 & \sigma_5 & \Omega\sigma_8 & \sigma_7 & \Omega\sigma_2 & \sigma_1 & \Omega\sigma_4 & \sigma_3 \\ \Omega\sigma_7 & \sigma_8 & \sigma_5 & \Omega\sigma_6 & \Omega\sigma_3 & \sigma_4 & \sigma_1 & \Omega\sigma_2 \\ \Omega\sigma_8 & \Omega\sigma_7 & \sigma_6 & \sigma_5 & \Omega\sigma_4 & \Omega\sigma_3 & \sigma_2 & \sigma_1 \end{pmatrix}$$

pour $P=8$,

une ligne de la matrice correspondant à une utilisation du canal de transmission et une colonne de la matrice correspondant à un élément radiatif, la matrice **C** étant définie à une permutation près de ses lignes et/ou ses colonnes et $\Omega$ étant une permutation des deux positions de modulation PPM.

2. Procédé selon la revendication 1, **caractérisé en ce que** ledit signal impulsionnel est un signal TH-UWB.

3. Procédé selon la revendication 1, **caractérisé en ce que** ledit signal impulsionnel est un signal DS-UWB.

4. Procédé selon la revendication 1, **caractérisé en ce que** ledit signal impulsionnel est un signal TH-DS-UWB.

5. Système de transmission UWB comprenant une pluralité $P$ d'éléments radiatifs, avec $P=4$ ou 8, **caractérisé en ce qu'**il comporte en outre:

   - des moyens de codage (310) pour coder un bloc de symboles d'information **S=($\sigma_1$,$\sigma_2$,...,$\sigma_P$)** appartenant à un alphabet de modulation 2-PPM, en une séquence de vecteurs, chaque vecteur étant associé à une utilisation du canal de transmission et un élément radiatif donnés, chaque composante d'un vecteur correspondant à une position de modulation PPM, lesdits vecteurs étant obtenus à partir des éléments de la matrice

$$C = \begin{pmatrix} \sigma_1 & \sigma_2 & \sigma_3 & \sigma_4 \\ \Omega\sigma_2 & \sigma_1 & \Omega\sigma_4 & \sigma_3 \\ \Omega\sigma_3 & \sigma_4 & \sigma_1 & \Omega\sigma_2 \\ \Omega\sigma_4 & \Omega\sigma_3 & \sigma_2 & \sigma_1 \end{pmatrix}$$

pour P = 4 ,

$$\mathbf{C} = \begin{pmatrix} \sigma_1 & \sigma_2 & \sigma_3 & \sigma_4 & \sigma_5 & \sigma_6 & \sigma_7 & \sigma_8 \\ \Omega\sigma_2 & \sigma_1 & \sigma_4 & \Omega\sigma_3 & \sigma_6 & \Omega\sigma_5 & \Omega\sigma_8 & \sigma_7 \\ \Omega\sigma_3 & \Omega\sigma_4 & \sigma_1 & \sigma_2 & \sigma_7 & \sigma_8 & \Omega\sigma_5 & \Omega\sigma_6 \\ \Omega\sigma_4 & \sigma_3 & \Omega\sigma_2 & \sigma_1 & \sigma_8 & \Omega\sigma_7 & \sigma_6 & \Omega\sigma_5 \\ \Omega\sigma_5 & \Omega\sigma_6 & \Omega\sigma_7 & \Omega\sigma_8 & \sigma_1 & \sigma_2 & \sigma_3 & \sigma_4 \\ \Omega\sigma_6 & \sigma_5 & \Omega\sigma_8 & \sigma_7 & \Omega\sigma_2 & \sigma_1 & \Omega\sigma_4 & \sigma_3 \\ \Omega\sigma_7 & \sigma_8 & \sigma_5 & \Omega\sigma_6 & \Omega\sigma_3 & \sigma_4 & \sigma_1 & \Omega\sigma_2 \\ \Omega\sigma_8 & \Omega\sigma_7 & \sigma_6 & \sigma_5 & \Omega\sigma_4 & \Omega\sigma_3 & \sigma_2 & \sigma_1 \end{pmatrix}$$

pour $P=8$,

une ligne de la matrice correspondant à une utilisation de canal de transmission et une colonne de la matrice correspondant à un élément radiatif, la matrice **C** étant définie à une permutation près de ses lignes et/ou ses colonnes et $\Omega$ étant une permutation des deux positions de modulation PPM ;

- une pluralité de modulateurs ($320_1, 320_2, .., 320_P$) pour moduler en position un signal UWB impulsionnel, chaque modulateur étant associé à un élément radiatif et modulant en position ledit signal, pendant une utilisation du canal de transmission, à l'aide des composantes du vecteur associé au dit élément radiatif et à ladite utilisation du canal ;

- chaque élément radiatif étant adapté à émettre le signal ainsi modulé par ledit modulateur associé.

6. Système de transmission selon la revendication 5, **caractérisé en ce que** les éléments radiatifs sont des antennes UWB.

7. Système de transmission selon la revendication 5, **caractérisé en ce que** les éléments radiatifs sont des diodes laser ou des diodes électroluminescentes.

8. Procédé de décodage spatio-temporel, pour un système de réception UWB à $Q$ capteurs, destiné à estimer les symboles d'information transmis par le système de transmission selon l'une des revendications 5 à 7, **caractérisé en ce qu'**il comprend :

- une étape d'obtention de $2QL$ variables de décision respectivement associées à $2QL$ voies de réception, chaque voie de réception étant relative à un capteur, un trajet de propagation entre les systèmes de transmission et de réception, et une position de modulation de l'alphabet de modulation 2-PPM, ladite étape d'obtention étant répétée pendant $P$ utilisations consécutives du canal de transmission, pour fournir un vecteur **Y** de taille $2QLP$, dont les composantes sont les $2QL$ variables de décision obtenues pour lesdites $P$ utilisations ;

- une étape de calcul du vecteur $\mathbf{Z}=\mathbf{Y}-(\mathbf{I_P}\otimes\mathbf{H})\Gamma$ où $\mathbf{I_P}$ est la matrice unité de taille $P\times P$, **H** est une matrice représentative du canal de transmission, $\Gamma$ est un vecteur constant représentatif du code et $\otimes$ est le produit de Kronecker ;

- une étape de calcul du vecteur $\tilde{\mathbf{Z}} = \left( \mathbf{h}_\varphi^{\mathbf{H}} \otimes \mathbf{I_2} \right) \mathbf{Z}$ avec $\mathbf{h}_\varphi = (\mathbf{I_P}\otimes\mathbf{h})\varphi$, où $\mathbf{I_2}$ est la matrice unité de taille $2\times2$, **h** est une matrice réduite du canal telle que $\mathbf{H}=\mathbf{h}\otimes\mathbf{I_2}$ et $\varphi$ étant la matrice

$$\varphi = \begin{pmatrix} 1 & 0 & 0 & 0 \\ 0 & -1 & 0 & 0 \\ 0 & 0 & 0 & 0 \\ 0 & 0 & 0 & -1 \\ 0 & 1 & 0 & 0 \\ 1 & 0 & 0 & 0 \\ 0 & 0 & 0 & 1 \\ 0 & 0 & -1 & 0 \\ 0 & 0 & 1 & 0 \\ 0 & 0 & 0 & -1 \\ 1 & 0 & 0 & 0 \\ 0 & 1 & 0 & 0 \\ 0 & 0 & 0 & 1 \\ 0 & 0 & 1 & 0 \\ 0 & -1 & 0 & 0 \\ 1 & 0 & 0 & 0 \end{pmatrix}'$$

pour $P$=4

et la matrice en annexe pour $P$=8 ;

- une étape de comparaison, pour chaque symbole, des composantes du vecteur $\tilde{\mathbf{Z}}$, relatives aux deux positions PPM de ce symbole, la position PPM estimée étant celle correspondant à la composante de plus grande amplitude.

9. Système de réception UWB comprenant une pluralité $Q$ de capteurs et, pour chaque capteur, un récepteur Rake associé, **caractérisé en ce que** chaque récepteur Rake comporte une pluralité $2L$ de doigts, chaque doigt correspondant à un trajet de propagation et à une position de modulation de l'alphabet de modulation 2-PPM, le système comprenant en outre :

- des moyens de conversion série parallèle pour former un vecteur **Y** de taille $2QLP$, dont les composantes sont les $2QL$ sorties des doigts des récepteurs Rake, pour $P$ utilisations consécutives du canal de transmission ;
- des moyens de calcul pour calculer d'abord un vecteur **Z=Y-($\mathbf{I_P} \otimes$H)**$\Gamma$ où $\mathbf{I_P}$ est la matrice unité de taille $P \times P$, **H** est une matrice représentative du canal transmission, $\Gamma$ est un vecteur constant représentatif du code et $\otimes$ est le produit de Kronecker, puis un vecteur $\tilde{\mathbf{Z}} = \left( \mathbf{h}_{\varphi}^{\mathrm{H}} \otimes \mathbf{I_2} \right) \mathbf{Z}$ avec $\mathbf{h_{\varphi}}$=($\mathbf{I_P} \otimes$**h**)$\varphi$, où $\mathbf{I_2}$ est la matrice unité de taille $2 \times 2$, **h** est une matrice réduite du canal telle que **H=h**$\otimes \mathbf{I_2}$ et $\varphi$ étant la matrice :

$$\varphi = \begin{pmatrix} 1 & 0 & 0 & 0 \\ 0 & -1 & 0 & 0 \\ 0 & 0 & 0 & 0 \\ 0 & 0 & 0 & -1 \\ 0 & 1 & 0 & 0 \\ 1 & 0 & 0 & 0 \\ 0 & 0 & 0 & 1 \\ 0 & 0 & -1 & 0 \\ 0 & 0 & 1 & 0 \\ 0 & 0 & 0 & -1 \\ 1 & 0 & 0 & 0 \\ 0 & 1 & 0 & 0 \\ 0 & 0 & 0 & 1 \\ 0 & 0 & 1 & 0 \\ 0 & -1 & 0 & 0 \\ 1 & 0 & 0 & 0 \end{pmatrix}'$$

pour P=4
et la matrice en annexe pour $P$=8 ;
- des moyens de comparaison adaptés à comparer pour chaque symbole, deux composantes du vecteur $\hat{Z}$, relatives aux deux positions PPM de ce symbole, la position PPM estimée étant celle correspondant à la composante de plus grande amplitude.

**10.** Système de réception selon la revendication 9, **caractérisé en ce que** les capteurs sont des antennes UWB.

**11.** Système de réception selon la revendication 9, **caractérisé en ce que** les capteurs sont des photodétecteurs.

FIG.1

EP 2 026 475 A1

$T_c$

$T_s$

$c_k(n) = 7,1,4,7$

**FIG. 2A**

TH-UWB

$b_n^{(k)} = +1,-1,+1,-1$

**FIG. 2B**

DS-UWB

**FIG. 2C**

TH-DS-UWB

EP 2 026 475 A1

$$S = (\sigma_1, \sigma_2, \sigma_3, \sigma_4)$$

310

300

$$C = \begin{pmatrix} \sigma_1 & \sigma_2 & \sigma_3 & \sigma_4 \\ \Omega\sigma_2 & \sigma_1 & \Omega\sigma_4 & \sigma_3 \\ \Omega\sigma_3 & \sigma_4 & \sigma_1 & \Omega\sigma_2 \\ \Omega\sigma_4 & \Omega\sigma_3 & \sigma_2 & \sigma_1 \end{pmatrix}$$

$\sigma_1, \sigma_2, \sigma_3, \sigma_4$

$320_1$     $330_1$

$\Omega\sigma_2, \sigma_1, \Omega\sigma_4, \sigma_3$

$320_2$     $330_2$

$\Omega\sigma_3, \sigma_4, \sigma_1, \Omega\sigma_2$

$320_3$     $330_3$

$\Omega\sigma_4, \Omega\sigma_3, \sigma_2, \sigma_1$

$320_4$     $330_4$

FIG. 3

FIG.4

EP 2 026 475 A1

**Europäisches Patentamt**
**European Patent Office**
**Office européen des brevets**

# RAPPORT DE RECHERCHE EUROPEENNE

Numéro de la demande

EP 08 16 1329

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ABOU-RJEILY C ET AL: "A rate-1 2 * 2 space-time code without any constellation extension for TH-UWB communication systems with PPM" 2007 IEEE 65TH VEHICULAR TECHNOLOGY CONFERENCE (IEEE CAT NO. 07CH37784) IEEE PISCATAWAY, NJ, USA, 22 avril 2007 (2007-04-22), - 25 avril 2007 (2007-04-25) pages 1683-1687, XP002470796 ISBN: 1-4244-0265-4 * le document en entier * ----- | 1-11 | INV. H04B7/08 H04B7/06 H04B1/69 H04L1/06 |
| X | ABOU-RJEILY C ET AL: "A space-time coded MIMO TH-UWB transceiver with binary pulse position modulation" IEEE COMMUNICATIONS LETTERS IEEE USA, vol. 11, no. 6, juin 2007 (2007-06), pages 522-524, XP002470797 ISSN: 1089-7798 * le document en entier * ----- | 1-7 | |

DOMAINES TECHNIQUES RECHERCHES (IPC)

H04B
H04L

Le présent rapport a été établi pour toutes les revendications

| Lieu de la recherche | Date d'achèvement de la recherche | Examinateur |
|---|---|---|
| La Haye | 27 novembre 2008 | Yang, Betty |

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **S.M. ALAMOUTI.** A transmit diversity technique for wireless communications. *IEEE Journal on selected areas in communications,* Octobre 1998, vol. 16, 1451-1458

- **V. TAROKH et al.** Space-time block codes from orthogonal designs. *IEEE Trans. on Information Theory,* Juillet 1999, vol. 45 (5), 1456-1567